Europäisches Patentamt

European Patent Office

Office européen des brevets

(19)

(11) Veröffentlichungsnummer: **0 141 090**
**A2**

(12) # EUROPÄISCHE PATENTANMELDUNG

(21) Anmeldenummer: **84109653.0**

(22) Anmeldetag: **14.08.84**

(51) Int. Cl.⁴: **G 01 N 27/12**

(30) Priorität: **30.08.83 CH 4737/83**

(43) Veröffentlichungstag der Anmeldung:
**15.05.85 Patentblatt 85/20**

(84) Benannte Vertragsstaaten:
**BE CH DE FR GB IT LI**

(71) Anmelder: **CERBERUS AG**
**Alte Landstrasse 411**
**CH-8708 Männedorf(CH)**

(72) Erfinder: **Forster, Martin, Dr. sc. nat.**
**Sonnenbergstrasse 16**
**CH-8645 Jona(CH)**

(74) Vertreter: **Tiemann, Ulrich, Dr.-Ing.**
**c/o Cerberus AG Patentabteilung Alte Landstrasse 411**
**CH-8708 Männedorf(CH)**

(54) **Vorrichtung zum Nachweis von gasförmigen Verunreinigungen in Luft mittels eines Gassensors.**

(57) Gasförmige Verunreinigungen in Luft werden durch einen Gassensor detektiert, dessen Material (1) aus einem getrockneten Gelstück ohne Fremdstoffe mit homogener Verteilung der Körner und Zwischenräume besteht. Das Material gewährleistet eine hohe Gasdurchlässigkeit und Ansprechempfindlichkeit bei niedrigen Betriebstemperaturen. Die für den Gasnachweis günstigste Raumform des Materials wird aus einer Gelplatte (16) herausgetrennt.

Fig. 1

EP 0 141 090 A2

Croydon Printing Company Ltd

Vorrichtung zum Nachweis von gasförmigen Verunreinigungen
in Luft mittels eines Gassensors.

---

Die Erfindung betrifft eine Vorrichtung zum Nachweis von
gasförmigen Verunreinigungen in Luft der im Oberbegriff des
Patentanspruchs 1 definierten Gattung. Die Erfindung betrifft
ferner ein Verfahren zur Herstellung eines in einer solchen
Vorrichtung zu verwendenden Gassensors.

Gassensoren werden seit einiger Zeit für verschiedene Zwecke
wie z.B. Umweltschutz, Garagen-Ueberwachung, Brandschutz
und Explosionsschutz verwendet. Hierzu benützt man einfache
Sensoren aus Metalloxiden, deren elektrische Leitfähigkeit
von der Konzentration der zu detektierenden Gase in der umgebenden Luft abhängt. Zur Durchführung des Gasnachweises
mit diesen Sensoren muss der Sensor auf eine Temperatur von
ca. 450°C gebracht werden. In ähnlicher Weise benutzt man
preiswerte Sensoren aus Metalloxiden, deren optische Eigenschaften von der Konzentration der zu detektierenden Gase
in der umgebenden Luft abhängen. Bei diesen optisch transparenten Gassensoren ändert sich das Absorptionsspektrum
und/oder das Reflexionsspektrum. Solche Gassensoren sind
beispielsweise in den schweizerischen Patenten Nr.
und Nr.          (Patentgesuch Nr. 1578/83 und Nr. 1579/83)
beschrieben.

In der US-PS 4 359 709 (Matsushita) wird ein Gassensorelement
beschrieben, dessen elektrischer Leitwert zum Nachweis benutzt wird. Das Gassensorelement besteht aus einem Metalloxid, welches als ein Gel hergestellt und zu Pulver zermahlen
wird. Dieses Pulver wird bei einer Temperatur von über 750°C
länger als eine Stunde gesintert und anschliessend zusammen
mit einem organischen Bindemittel gepresst. Durch diese Bearbeitungsvorgänge werden Fremdstoffe in das Material des Sensorelementes eingebracht, welche die Gasempfindlichkeit reduzieren. Ferner ist die bei der Herstellung des Gels erzielte Korngrösse und Porosität durch diese nachfolgenden Bearbeitungsvorgänge unkontrolliert verändert. Dies bedeutet eine Verschlechterung der Gasempfindlichkeit.

Der Erfindung liegt die Aufgabe zu Grunde, ein Material für einen Gassensor zu entwickeln, welches keine Fremdstoffe enthält und eine definierte Korngrösse und Porosität aufweist. Die hohe Porosität und die geringe Korngrösse, die bei der Gelherstellung erzielt wird, bleiben somit erhalten und kommen dem Sensorelement im Gassensor zugute. Hierdurch ergibt sich der Vorteil, dass die Temperaturen, bei denen das Sensorelement zum Gasnachweis betrieben wird, wesentlich kleiner bzw. tiefer gehalten werden können als bei bekannten Gassensoren, da die Eigenschaften des erfindungsgemässen Sensorelementes durch keine Arbeitsprozesse unkontrolliert verändert werden.

Diese Aufgabe wird erfindungsgemäss durch die in den Patentansprüchen 1 und 18 bis 20 definierten Merkmale gelöst. Bevorzugte Ausführungsformen und Weiterbildungen der Erfindung sind in den abhängigen Patentansprüchen definiert.

Die Erfindung weist gegenüber dem Stand der Technik folgende Vorteile auf:

Das Sensorelement wird aus einem grossen Gelstück in der für den Gasnachweis günstigsten Form herausgeschnitten, -geschliffen oder -gesägt;

- das Sensorelement besitzt eine hohe Gasdurchlässigkeit für die zu detektierenden Gase und spricht daher schnell an;

- das Sensorelement besitzt eine grosse Oberfläche für hohe
  Ansprechempfindlichkeit trotz kleiner räumlicher Abmessungen;

- das Sensorelement ist trotz seiner für den Gasnachweis
  optimalen Porosität und Korngrösse so stabil, dass es mit
  den bekannten Techniken der Halbleiterherstellung zu einem
  Gassensor beliebiger räumlicher Dimensionen verarbeitet
  werden kann, wie z.B. Sägen, Schneiden, Schleifen, Polieren, Löten, Kontaktieren, Beschichten, Bedampfen usw.;

- das Sensorelement benötigt für den Gasnachweis nur niedrige Betriebstemperaturen, die zwischen der normalen Zimmertemperatur und ca. 450°C liegen, wobei grosser Wert
  auf geringe Wärmeableitung gelegt wird. Dadurch kann die
  eingestellte Betriebstemperatur bei geringem Energieverbrauch leicht konstant gehalten werden;

- der Gasnachweis erfolgt auf Grund der in Abhängigkeit von
  der Gaskonzentration erfolgenden Aenderung der elektrischen
  Leitfähigkeit und/oder der optischen Eigenschaften (Absorption, Reflexion) des Sensorelements.

Im folgenden werden an Hand der Zeichnungen Ausführungsbeispiele der Erfindung näher erläutert. Es zeigen:

Figuren 1a, b, c    Strukturen des Materials des Sensorelementes,

Figur 2             das Sensorelement für die Erfassung
                    seiner elektrischen Leitfähigkeit bei
                    Einwirkung von Gasen,

| Figur 3 | das Sensorelement für die Erfassung seiner optischen und/oder elektrischen Eigenschaften bei der Einwirkung von Gasen, |
|---------|---------|
| Figur 4 a - s | verschiedene Anordnungen von Elektroden am Material des Sensorelementes, |
| Figur 5 | einen bei Zimmertemperatur betriebenen Gassensor, |
| Figur 6 | einen bei erhöhter Temperatur betriebenen Gassensor, |
| Figuren 7 - 10 | verschiedene Ausführungen eines Mehrfach-Gassensors, |
| Figuren 11, 12 | Lenkung des Luftstromes an einem Mehrfach-Gassensor. |

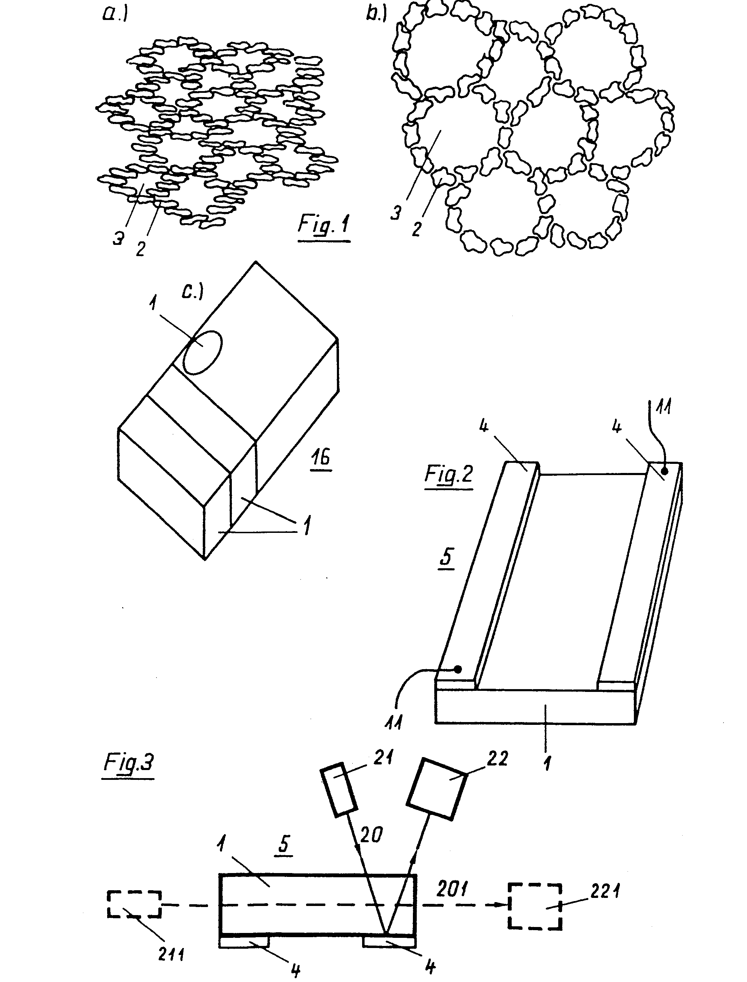

Die Figuren 1a und 1b zeigen die angelagerten Körner 2, die Hohlräume 3 bilden. In der Figur 1c ist eine Gelplatte 16 dargestellt, welche die Strukturen der Fig. 1a, 1b in ihrer gesamten räumlichen Ausdehnung enthält. Im folgenden wird die Herstellung der Gelplatte 16 und des Materials 1 der Sensorelemente 5 für den Gasnachweis beschrieben. Als Ausgangsmaterial dient ein Metalloxid, ein Metalloxidhydrat oder Metallhydroxid, welches einer der Gruppen Ib, IIa, IIb, IIIa, IIIb, IVa, IVb, Va, Vb, VIa, VIb, VIIb, VIII des Periodensystems oder den Lanthanoiden oder Actinoiden angehörtoder ein Gemisch dieser Oxide, Hydroxide oder Oxidhydrate. Die Auswahl erfolgt nach dem Gesichtspunkt, für welche Gase die Sensorelemente 5 eingesetzt werden sollen. Für diese Gase wird eine optimale Ansprechempfindlichkeit verlangt. Zuerst wird eine kolloidale Metalloxid-, Metalloxidhydratoder Metallhydroxid-Lösung hergestellt. Da die Herstellung von kolloidalen Lösungen bekannt ist, werden im folgenden nur die Unterschiede zum Bekannten erklärt. Ein Metallsalz oder Metallsalzgemisch wird in Wasser gelöst. Durch Zugabe von Alkalien, z.B. NaOH, KOH, $NH_4OH$ usw., wird das Metalloxid, das Metalloxidhydrat oder das Metallhydroxid gefällt. Der Niederschlag wird mit Wasser gewaschen und durch ein Peptisationsmittel, z.B. HCl, $CH_3COOH$, NaOH, KOH, $NH_4OH$ als Kolloid wieder in Lösung gebracht. Diese kolloidale Lösung wird durch Dialyse gereinigt. Anstelle der Metallsalze können auch Metallalkoxide vom Typ $Me(OR)_x$ verwendet werden. Hierbei bedeuten das Symbol Me das Metall und das Symbol OR einen Alkoholrest. Werden diese Metallalkoxide statt in Wasser in einem organischen Lösungsmittel z.B. in Aethanol, Isopropanol, Aceton u.s.w. gelöst, so kann durch Wasserzugabe eine kolloidale Metallhydroxidlösung oder eine kolloidale Metalloxid- oder eine Metalloxidhydratlösung entstehen. Die nun folgenden Verfahrensschritte zur Herstellung der kolloidalen Lösung und der Herstellung der Gelplatte 16 der Figur 1c mit der Struktur der Figur 1a oder der Figur 1b werden anhand von zwei Beispielen näher erläutert.

1. Beispiel

---

17,5 g $SnCl_4$ werden in 500 g $H_2O$ gelöst und mit konzentriertem $NH_4OH$ auf einen Wert pH = 7 gebracht. Der Niederschlag von $SnO_2 \cdot x\ H_2O$ wird filtriert, mehrmals mit Wasser gewaschen und anschliessend mit einer Lösung von 30 ml konzentriertem $NH_4OH$ in 150 ml $H_2O$ während mehreren Stunden kräftig verrührt. Man erhält eine klare, kolloidale Lösung von $SnO_2 \cdot x\ H_2O$, die während mehreren Tagen dialysiert wird. Die Herstellung der kolloidalen Lösung erfolgt bei Zimmertemperatur.

Die wässerige 0,125 molare Lösung von kolloidalem $SnO_2$ wird in eine Form gegossen. Diese Form bildet die spätere relative Gestalt der Gelplatte mit den räumlichen Abmessungen von z.B.

10cm x 5cm x 0,6cm. Diese Lösung lässt man 12 Tage lang bei Zimmertemperatur eintrocknen. Hierbei erhält man eine farblose, vollkommen transparente Gelplatte aus Metalloxidhydrat mit stark verkleinerten Massen, deren relative Verhältnisse den oben angegebenen entsprechen. Hieran schliesst sich der nächste Verfahrensschritt zur Erzeugung des Metalloxidxerogels gemäss Figur 1a an. Zu diesem Zweck wird die Gelplatte in Luft (Normaldruck) innert 9 Stunden auf die Temperatur von 300°C erhitzt. Dies geschieht mit einem Temperatursteigerung von 30°C/Stunde. Die Temperatur von 300°C liegt um 100°C höher als die Betriebstemperatur, bei der das Sensorelement 5 für einen optimalen Gasnachweis später betrieben wird. Die Gelplatte bleibt 4 Stunden lang dieser Temperatur von 300°C ausgesetzt und wird dann auf Raumtemperatur abgekühlt. Man erhält eine leicht gelbliche Platte aus $SnO_2$-Xerogel mit einer Porosität (Zwischenräume 3) von 48 Vol.-% und einer Grösse der Körner 2 im Bereich von 1 nm bis 80 nm. Die Wahl der Trocknungsgeschwindigkeit und des Temperaturgradienten bestimmt die Porosität und die Korngrösse, welche nicht mehr geändert werden, z.B. durch die nachfolgenden Bearbeitungsvorgänge. Daher kann die für den Gasnachweis optimale Grösse der Körner 2 und der Zwischenräume 3 von Anfang an ohne Furcht vor ungewollter Aenderung richtig gewählt werden. Die in Figur 1c gezeigte Gelplatte 16 besitzt trotz ihrer grossen Porosität und Korngrösse eine so hohe Stabilität bzw. Festigkeit, dass sie nun mit den in der Halbleitertechnik bekannten Methoden bearbeitet werden kann. Im vorliegenden Fall wird die Gelplatte 16 geschliffen, poliert, mit Elektroden bedampft und in Stücke geschnitten bzw. gesägt. Beispielshalber sind zwei rechteckige und ein elliptisches Sensorelement in Figur 1c dargestellt. Die Gestalt eines Sensorelementes wird so gewählt, dass es die optimale Form für den vorgesehenen Gasnachweis besitzt. Die Sensorelemente können quadratische, rechteckige, kreisrunde, elliptische usw. Querschnitte haben und eine Pyramide, Kugel, einen Zylinder, Kegel, Prisma usw. darstellen. Diese Formgestaltung richtet sich danach, in welchem Gassensor das Sensorelement eingebaut werden soll und welche Strömungsgeschwindigkeiten für den Gasnachweis vorgesehen sind. Die aus der
Gelplatte 16 herausgetrennten Sensorelemente werden mit Elektroden 4 bedampft, wenn sie für den Gasnachweis mittels der
elektrischen Eigenschaften des Materials 1 vorgesehen sind.
Dies wird später näher beschrieben.

2. Beispiel

Eine Lösung von 2,1 g $Ti(O(CH_2)_3CH_3)_4$ in 4,7 g Methanol wird
zu 51 g $H_2O$ gegeben. 0,65 g Oxalsäure-dihydrat werden in 6 ml
$H_2O$ gelöst und zur opaken, kolloidalen $TiO_2$-Lösung gegeben.
Dadurch wird das $TiO_2$ nach mehreren Minuten peptisiert, und
die Lösung wird völlig klar. Diese Lösung wird dann mehrere
Tage lang dialysiert. Die Herstellung der kolloidalen Lösung
erfolgt bei Zimmertemperatur.

Die wässerige 0,1 molare Lösung von kolloidalem $TiO_2$ wird nun
in eine Form gegossen. Diese Lösung lässt man während 4 Tagen
bei Raumtemperatur und bei Normaldurck langsam eintrocknen.
Man erhält ein Gel, dass die Form z.B. einer Platte angenommen hat. Zur Erzeugung von Metalloxydaerogel wird die Gelplatte in einem weiteren Verfahrensschritt während mehreren Wochen
in immer wieder erneuertes Methanol gelegt und somit in eine
Alkogelplatte überführt. Dieser Prozess wird bei Raumtemperatur und bei Normaldruck durchgeführt. Anschliessend wird die
mit Methanol getränkte Alkogelplatte auf einen Druck und auf
eine Temperatur gebracht, welche für Methanol überkritisch
sind, und dabei eine Stunde lang belassen. Dann werden der
Druck auf Normaldruck und anschliessend die Temperatur auf
Raumtemperatur gesenkt. Dies ergibt eine Platte 16 aus $TiO_2$-
aerogel mit einer Porosität (Zwischenräume 3) von 80 Vol.-%

und einer Grösse der Körner 2 im Bereich 5 nm bis 120 nm. Die Zeit des Trocknens der kolloidalen Lösung und die Grösse der Temperatur und des Druckes bestimmen die Porosität und die Korngrösse. Die nachfolgenden Verfahrensschritte ändern die Porosität und die Korngrösse nicht mehr. Daher kann die für den Gasnachweis optimale Grösse der Körner 2 und der Zwischenräume 3 von Anfang an richtig gewählt werden, ohne fürchten zu müssen, dass sie sich unbeabsichtigt ändert. Die in Figur 1c gezeigte Gelplatte 16 hat trotz ihrer grossen Porosität und geringen Korngrösse eine hohe Stabilität bzw. Festigkeit, sodass die Platte mit den in der Halbleitertechnik üblichen Methoden bearbeitet werden kann. Im vorliegenden Fall wird die Gelplatte 16 geschliffen, poliert und in Stücke geschnitten bzw. gesägt gemäss Figur 1c. Die Sensorelemente 5, bei denen ihre elektrische Leitfähigkeit zum Gasnachweis benutzt wird, werden mit Elektroden 4 bedampft. Die Sensorelemente, bei denen ihre optischen Eigenschaften für den Gasnachweis benutzt werden, erhalten keine Elektroden.

Im zweiten Beispiel besteht auch die Möglichkeit, das organische Lösungsmittel, z.B. Methanol, bereits der kolloidalen $TiO_2$-Lösung zuzufügen. Hiernach wird die Lösung in die Form gegossen und wie beschrieben zur Gelplatte 16 geformt. Im folgenden Verfahrensschritt wird die Gelplatte nur noch auf für das Methanol überkritische Temperatur und überkritischen Druck gebracht und dabei eine halbe Stunde lang belassen. Anschliessend werden wieder zuerst der Druck auf Normaldruck und dann die Temperatur auf Raumtemperatur gesenkt. Das anschliessende Verarbeiten der Gelplatte zu Sensorelementen ist gleich geblieben.

Die beiden Beispiel zeigten die Verwendung des $SnO_2$- bzw. $TiO_2$-Gels für das Material 1. Bevorzugte Metalloxidgele bestehen aus den Oxiden von Ti, Zn, Sn, La, Cu, Cr, Ni, Al, Fe, In, Bi, Mn, V, W, Zr sowie aus ihren Mischungen untereinander.

Bei den Beispielen besteht noch die Möglichkeit, die Gelplatte 16 mit einem Katalysator zu dotieren, wodurch die Ansprechempfindlichkeit für bestimmte Gase verbessert wird. Bevorzugte Katalysatoren sind Metalle Ag,Au,Pt,Pd,Rh,Ir,Ru, Os,Cu,Cr,Ni,Fe,Co,La,Ce,Mn sowie ihre Oxide. Diese Katalysatoren können schon anfänglich in geeigneter Form in der kolloidalen Lösung enthalten sein. Sie können aber auch nachträglich eingebracht werden, indem die Platte 16 aus Metalloxidxerogel oder Metalloxidaerogel mit der Lösung eines oder mehrerer organischer Metallsalze oder Metallkomplexe getränkt und auf eine Temperatur gebracht wird, die um maximal 700°C bevorzugt um 500°C bzw. 300°C höher liegt als die spätere Betriebstemperatur, bei der das Sensorelement 5 betrieben werden soll. Die Metallsalze oder Metallkomplexe zersetzen sich bei diesem Heizvorgang. Der Katalysator ist dann in reiner Form von nur Metalloxid- oder Metallpartikeln in der Platte 16 ohne ionische Verunreinigungen vorhanden.

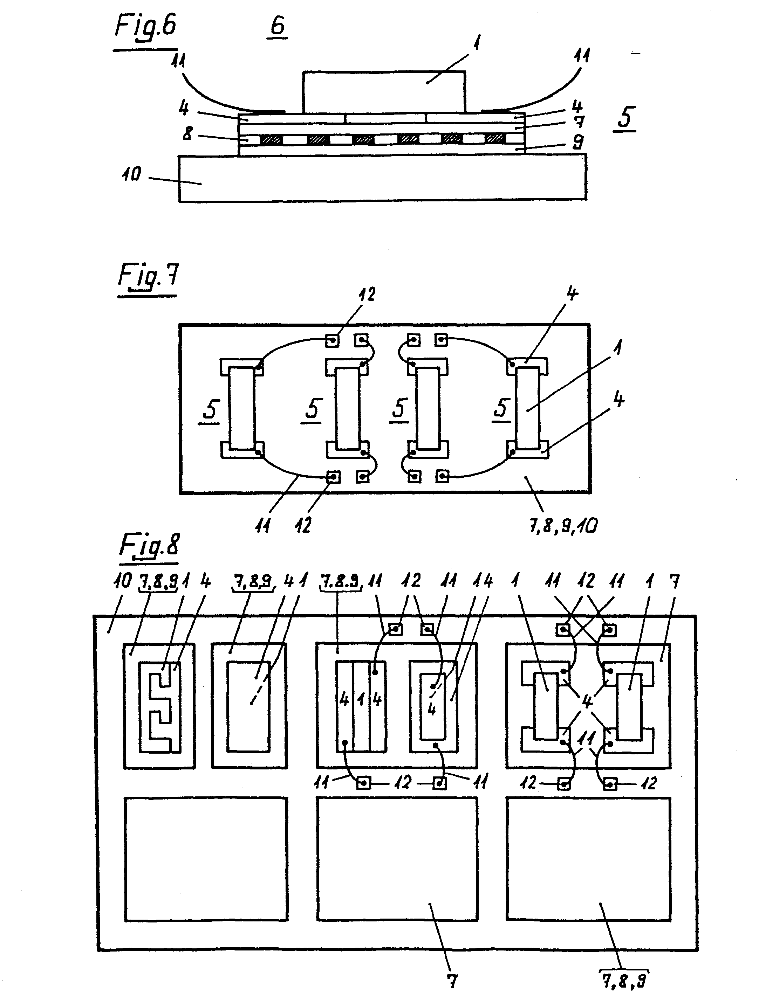

Die Figur 2 zeigt ein rechteckförmiges Sensorelement 5 mit den räumlichen Massen 1mm x 2mm x 0,5mm, das aus der grossen Gelplatte 16 herausgeschnitten wurde. Die Elektroden 4 sind als dünne Goldschicht (ca. 2 μm) auf der Oberfläche aufgedampft und mit dünnen Drähten 11 verbunden, die einen Durchmesser von ca. 30 μm haben und daher eine kleine Wärmeableitung aufweisen. Für die Gasdetektion wird das Sensorelement 5 auf seine Betriebstemperatur gebracht, die im Bereich zwischen Raumtemperatur bis zu 450°C liegen kann. Das Material 1 des Sensorelementes 5 detektiert prinzipiell alle vorkommenden oxidierenden und reduzierenden Gase. Da das Material 1 für verschiedene Gase aber unterschiedliches Ansprechverhalten hat, wird sein Ansprechverhalten für die zu erwartenden Gase oder Bereiche von Gaszusammensetzungen in der Weise optimiert, dass das günstigste Metalloxid oder Metallhydroxid bzw. deren Gemische mit oder ohne Katalysator und die günstigste Betriebstemperatur gewählt werden. Die Betriebstemperatur kann durch die Heizung 8 (siehe Figuren 6 - 10) oder durch die Umgebungstemperatur (siehe Figuren 2 - 5) eingestellt und konstant gehalten werden. Bei dem Sensorelement 5 der Figur 2 verändert
sich die elektrische Leitfähigkeit, wenn ein Gas in das Material 1 eindringt. bzw. seine Oberfläche überstreicht. Die
Aenderung des elektrischen Leitwertes wird zwischen den Elektroden 4 gemessen. Daher sind Drähte 11 an einem Auswertegerät angeschlossen, das die Aenderung des Leitwertes misst
und das Gas sowie die Gaskonzentration anzeigt und Alarm bzw.
entsprechende Gegenmassnahmen, z.B. be- und entlüften, einleitet. Dies Auswertegerät ist nicht Gegenstand der vorliegenden Erfindung und daher weder gezeichnet noch beschrieben.

Die Figur 3 zeigt ein Sensorelement 5, welches bei Raumtemperatur das Gas und die Gaskonzentration durch seine elektrischen und/oder optischen Eigenschaften detektiert. Die optischen Eigenschaften des Sensorelementes 5 ändern sich in ähnlicher Weise wie die elektrischen Eigenschaften, wenn ein Gas
in das Material 1 eindringt oder seine Oberfläche überstreicht.
Reduzierende Gase färben das Material 1 dunkel. Oxidierende
Gase färben das Material 1 hell. Das Sensorelement 5 der Figur 3 kann für folgende Gasnachweis-Methoden verwendet werden:

a) Messen der elektrischen Leitfähigkeit des Materials 1
zwischen den beiden Elektroden 4;

b) Messen der Transparenz des Materials 1 für einen Strahl,
z.B. Lichtstrahl 20, der von der Strahlenquelle 21 in
das Sensorelement gesendet, an der Spiegelfläche der
Elektrode 4 reflektiert wird und zum Strahlungsempfänger
22 gelangt;

c) Messen der Transparenz des Materials 1 für einen Strahl,
z.B. Lichtstrahl 201, der von der Strahlenquelle 211 in
das Sensorelement gesendet und ohne Reflexion auf den
Strahlenempfänger 221 gelangt. Dies ist gestrichelt gezeichnet.

Jede der drei Methoden kann einzeln oder in Kombination angewendet werden. Dies richtet sich nach Verwendungszweck des
Gassensors. Es gibt Gase, bei deren Einwirkung die optischen
Eigenschaften des Materials 1 eine bessere Information liefert als die elektrischen Eigenschaften. Bei anderen Gasen
liefern die elektrischen Eigenschaften des Materials 1 eine
bessere Information als die optischen Eigenschaften. Die
Kombination der Methoden a)b) oder a)c) bringt den Vorteil,
dass bei jedem Gas immer die beste Information über die Gaskonzentration geliefert wird. Ein weiterer Vorteil ist darin
zu sehen, dass eine Vorauswahl über die Gaskategorie oder
über das Gas durch die elektrische und optische Methode getroffen werden kann. Diese Vorauswahl erfolgt dadurch, welche Methode die bessere Information zum Auswertegerät gibt.
Das verwendete Licht für den optischen Nachweis kann eine
Wellenlänge von 200 nm bis 50 $\mu$m haben.

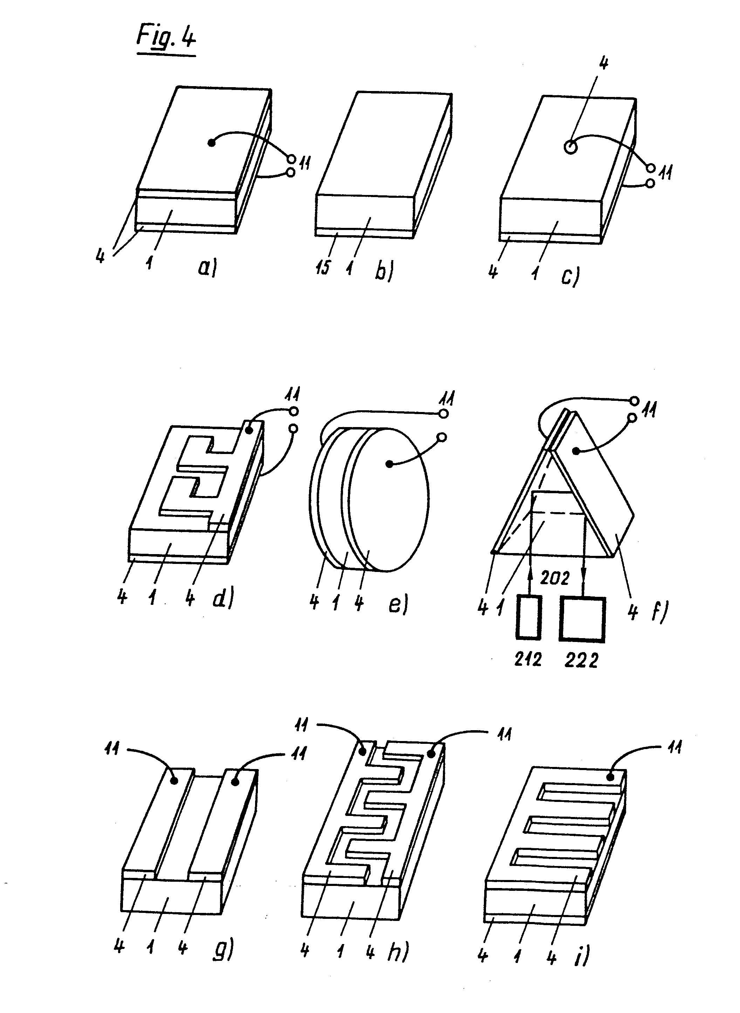

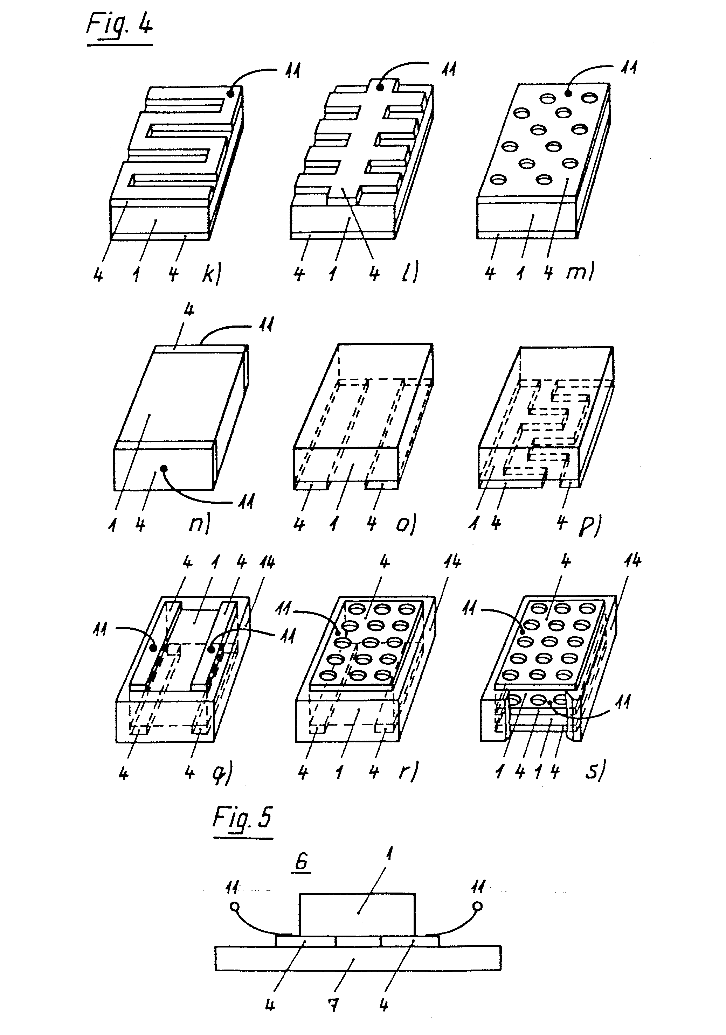

Figur 4 zeigt weitere Ausführungsbeispiele des Sensorelementes 5, das bei Raumtemperatur oder bis zu Temperaturen von
450°C betrieben wird.

In der Figur 4a ist das Material 1 rechteckförmig gezeichnet.
Die beiden Elektroden 4 sind als Flächenelektroden auf den
beiden gegenüberliegenden Seiten angeordnet. Die Drähte 11
führen von den Elektroden zu einem nicht gezeichneten Auswertegerät, das die elektrische Leitfähigkeit zwischen den
Elektroden 4 misst und an Hand der Aenderung der elektrischen
Leitfähigkeit das Gas und seine Konzentrationen feststellt und
bei Ueberschreiten der Konzentrationsgrenze Alarm gibt oder
zweckmässige Gegenmassnahmen einleitet. Die räumlichen Masse
des Materials 1 betragen 1mm x 1,5mm x 0,5 mm.

Die Figur 4b zeigt ein rechteckiges Sensorelement ohne Elektrode. An der unteren Seite des Materials 1 ist eine Reflexionsschicht 15 in einer Stärke von 3 $\mu$m angeordnet. Das Sensorele-

ment ist für die opitsche Reflektions-Messmethode vorgesehen und hat die räumlichen Dimensionen von 0,1mm x 0,1mm x 0,02mm.

Die Figur 4c zeigt ein rechteckiges Sensorelement mit einer flächenförmigen Elektrode auf der unteren Seite des Materials 1 und einer punktförmigen Elektrode auf der oberen Seite. Die Elektroden sind mit Drähten 11 versehen. Das Sensorelement ist für die elektrische Leitfähigkeit-Messmethode vorgesehen.

Die Figur 4d zeigt ein rechteckiges Sensorelement mit flächenförmigen Elektroden 4. Die eine Elektrode bedeckt die gesamte untere Fläche des Materials 1. Die andere Elektrode ist in einem bestimmten Muster ausgebildet, z.B. Mäander-Muster, und bedeckt nur einen Teil der gegenüberliegenden Fläche des Materials 1. Die Elektroden 4 sind mit Drähten 11 versehen. Das Sensorelement ist für die elektrische Leitfähigkeits-Messmethode vorgesehen und besitzt die räumlichen Dimensionen von 10mm x 5mm x 1mm.

In der Figur 4e ist ein zylinderförmiges Sensorelement 5 gezeichnet, dessen Elektroden 4 an den beiden gegenüberliegenden Flächen des Materials 1 angebracht sind und über Drähte 11 mit einem nicht gezeichneten Auswertegerät verbunden sind. Das Sensorelement wird für die elektrische Leitfähigkeits-Messmethode verwendet und hat einen Durchmesser von 2mm.

In der Figur 4 f ist ein prismatisches Sensorelement dargestellt. Die beiden Elektroden 4 sind auf den beiden im spitzen Winkel zusammenlaufenden Flächen des Materials 1 angeordnet und an der Spitze des Sensorelementes elektrisch voneinander isoliert. Die Drähte 11 verbinden die Elektroden 4 mit dem nicht gezeichnenten Auswertegerät. Das Sensorelement wird für die elektrische Leitfähigkeits-Messmethode verwendet. Da die beiden Elektroden 4 aus einer Goldschicht bestehen, sind ihre Innenflächen Spiegelflächen, an denen ein Strahl 202, der von einer Strahlenquelle 212 erzeugt, reflektiert wird und zu einem Strahlenempfänger 222 gelangt, der das Signal an ein nicht gezeichnetes Auswertegerät weiterleitet. Die Einrichtung ist für die optische Messmethode vorgesehen. Das Sensorelement kann daher für beide Messmethoden und auch wahlweise für die eine oder andere Messmethode verwendet werden. Dies kann z.B.durch eine entsprechende Auswahl der Signale im Auswertegerät erfolgen. Abschliessend sei darauf hingewiesen, dass wegen der prismatischen Form des Sensorelementes der Strahl 202 zweimal reflektiert wird und eine grosse Wegstrecke durch das Material 1 zurücklegt. Dies ergibt den Vorteil, dass trotz kleiner räumlicher Masse des Sensorelementes eine grosse Wegstrecke für das Messen der optischen Eigenschaft und somit eine grosse Ansprechempfindlichkeit vorhanden ist.

Die Figur 4g zeigt das Material 1 des Sensorelementes 5 mit zwei Elektroden 4, die über die Drähte 11 mit dem nichtgezeichneten Auswertegerät verbunden sind. Das Sensorelement dieser Figur kann z.B. auf eine Heizfläche aufgeklebt werden. Diese Heizfläche wäre an der unteren Seite des Sensorelementes angeordnet.

Die Figur 4h zeigt ein Muster der auf einer Seite des Materials 1 eingeordneten Elektroden 4. Die Elektroden haben die Verbindungsdrähte 11.

Die Figur 4i zeigt auf der oberen Seite des Materials 1 ein anderes Muster der Elektrode 4 wie auf der unteren Seite.

Figur 4k zeigt auf der oberen Seite eine Elektrode 4 mit einem weiteren Muster und auf der unteren Seite eine plattenförmige Elektrode 4.

Die Figur 4l zeigt auf der unteren Seite des Materials 1 eine plattenförmige Elektrode 4. Auf der gegenüberliegenden Seite ist eine Elektrode 4 mit einem bestimmten Muster vorgesehen.

Figur 4m zeigt eine plattenförmige Elektrode 4 auf der unteren Seite und eine plattenförmige Elektrode 4 auf der oberen Seite des Materials 1. Die obere Elektrode 4 hat Löcher, sodass die Luft mit den gasförmigen Verunreinigungen, die detektiert werden sollen auf die obere Seite des Materials 1 des Sensorelementes geblasen werden kann. Die Löcher in der Elektrode sind so gross          dass genügend Luft auf die obere Fläche des Materials 1 des Sensorelementes gelangen kann.

Die Figur 4n zeigt das Material, welches an seinen beiden Seitenenden je eine Elektrode 4 aufweist. Diese Elektrodenanordnung ist dann zweckmässig, wenn das Material 1 des Sensorelementes auf eine Heizschicht 8 gesetzt werden soll. Dies wird später im Zusammenhang mit den Figuren 6, 7, 8 und 9 näher erläutert.

Die Figur 4o zeigt auf der unteren Seite des Materials 1 die beiden Elektroden 4. Es handelt sich hier um eine ähnliche Konstruktion wie sie später im Zusammenhang mit der Figur 5 noch näher beschrieben wird.

Die Figur 4p zeigt ein besonderes Muster von zwei Elektroden 4, die auf einer Seite, nähmlich der unteren, des Materials 1 angeordnet sind. Das Sensorelement dieser Figur ist dafür gedacht, dass auf der Seite, die Elektroden aufweist eine Heizschicht 8 vorgesehen werden kann und das Element über die Elektroden 4 auf die isolierende Schicht 7 geklebt wird. Dies wird später im Zusammenhang mit den Figuren 6, 7, 8 und 9 noch näher besprochen.

In der Figur 4q ist das Material 1 des Sensorelementes 5 mit Ausnahme der oberen Fläche allseitig gasdicht eingeschlossen. Das zu detektierende Gasgemisch muss deshalb von oben durch das Material 1 hindurch diffundieren.Da schon auf der Oberseite ein Teil der leicht oxidierbaren Gase verbrennen, ergeben diese bevorzugt an den oberen Elektroden 4 eine Leitfähigkeitsänderung. Ebenfalls ist die Temperatur oben tiefer als unten, wo die Heizung angebracht ist. Die erst bei höheren Temperaturen oxidierbaren Gase diffundieren ins Gebiet der unteren Elektroden 4 und ergeben dort eine Aenderung der elektrischen Leitfähigkeit. Dadurch wird eine gewisse Spezifität des Sensors für verschiedene Gassorten erreicht.

In der Figur 4r enthält das Sensorelement 5 eine gelochte obere Elektrode 4 und zwei Elektroden, die auf der unteren
Seite vorgesehen sind. Bei diesem Sensorelement wird der
Widerstand von der oberen zu den beiden unteren Elektroden
gemessen. Dieses Sensorelement wird z.B. nur auf der linken
Seite beheizt und ist dort also auf einer höheren Temperatur
als rechts. Wenn nun die zu untersuchende Luft mit den gasförmigen Verunreinigungen von rechts nach links strömt, so
werden auf der rechten Seite zuerst die leicht oxidierbaren
Gase oxidiert und ergeben rechts grosse Aenderungen der elektrischen Leitfähigkeit. Auf der linken Seite werden die bei
höheren Temperaturen oxidierbaren Gase die entsprechenden
elektrischen Signale erzeugen. Dadurch wird eine Aufteilung
eines Gasgemisches in seine einzelnen Komponenten ermöglicht.
Die Anzahl der unteren Elektroden 4 muss nicht zwei sein, sondern kann 5,10 oder mehr betragen. Das ganze Sensorelement
kann eine Länge von bis zu 2cm haben. Die Tiefe beträgt ca.
2mm. Die Höhe ist ungefähr 1mm. Die obere Elektrode 4 muss
auch nicht direkt gelocht sein. Sie kann einfach als stark
gasdurchlässig konstruiert sein. Das bedeutet, dass die Elektrode auch porös sein kann. Die Umhüllung 14 des Materials 1
ist gasundurchlässig.

In der Figur 4s enthält das Sensorelement 5 auf seiner unteren
Fläche eine durchgehende, in der Mitte und oben eine gelochte
bzw. hochporöse Elektrode 4. Dazwischen befindet sich das Material 1, das jedoch unten eine andere chemische Zusammensetzung hat als dasjenige oben. Die beiden Materialien sind
deshalb auch unterschiedlich empfindlich für verschiedene Gase. Zusätzlich kommt noch ein Temperaturunterschied zwischen
unten und oben hinzu. Wenn unten die Heizfläche 8 vorgesehen
ist dann herscht auch an der unteren Seite des Materials 1
die grössere Temperatur. Das Temperaturgefälle ist von der
unteren zur oberen Seite des Materials 1 gerichtet. Leicht
oxidierbare Gase werden im oberen Teil des Materials 1 oxidiert und ergeben grosse elektrische Signale zwischen der oberen und der mittleren Elektrode 4. Schwieriger oxidierbare Gase geben im unteren und heisseren Teil des Materials 1 grosse elektrische Signale der Leitfähigkeitsänderungen. Dadurch kann eine Auftrennung eines Gasgemisches in seine Komponenten mühelos ermöglicht werden. Somit können einzelne Gase selektiv detektiert werden. Der Draht 11 der mittleren Elektrode geht durch die gasdichte Umhüllung 14 hindurch. Zum besseren Verständnis ist die gasdichte Umhüllung 14 auf der Vorderseite des Sensorelementes aufgeschnitten dargestellt.

Die Sensorelemente der Figuren 2,3,4a-s können je nach Verwendungszweck zu Einzel-Gassensoren 6 (Figuren 5,6) oder zu Mehrfach-Gassensoren 6 (Figuren 7,8,9,10) mit oder ohne Heizung 8 zusammengebaut werden. Die Figur 5 zeigt einen Gassensor 6, der aus dem Sensorelement 5 und einer elektrisch isolierenden Schicht 7 besteht. Diese Schicht 7 dient zur Isolierung der beiden Elektroden 4 und ist ca. 0,02mm dick. Wenn der Gassensor an dem zu überwachenden Ort angebracht und die Drähte 11 mit einem Auswertegerät verbunden sind, ist der Gassensor betriebsbereit. Er dient für die elektrische Leitfähigkeits-Messmethode. Das Material 1 hat die Umgebungstemperatur. Das Material 1 ist in der Figur 5 rechteckig dargestellt. Es kann jede andere Form haben wie es im Zusammenhang mit den anderen Figuren beschrieben wurde.

Ein geheizter Gassensor für die elektrische Leitfähigkeits-Messmethode ist in der Figur 6 dargestellt. Die Elektroden 4 sind an einer Fläche des Materials 1 angebracht und werden von der elektrischen Isolationsschicht 7 abgedeckt. Die Heizung (8) ist zwischen der Isolationsschicht 7 und einem elektrisch isolierenden Substrat 9 vorgesehen und besteht bei diesem Ausführungsbeispiel aus Heizdrähten, die gestrichelt gezeichnet sind. Diese gesamte Anordnung ist auf einem thermisch und elektrisch isolierenden Substrat 10 befestigt. Der Gassensor 6 wird an dem zu überwachenden Ort angebracht und mit seinem Substrat 10 dort befestigt. Die Drähte 11 verbinden die Elektroden 4 mit dem nicht gezeichneten Auswertegerät. Die Heizschicht 8 wird mit einer nicht gezeichneten Stromquelle verbunden. Eine Heizregelung sorgt dafür, dass die gewünschte Betriebstemperatur, die im Bereich von Raumtemperatur bis 450°C liegen kann, eingestellt und konstant gehalten wird. Strom und Spannung, die an der Heizschicht 8 auftreten, werden zur Regelung der Betriebstemperatur benutzt. Da das Material 1 und die Elektroden 4 eine höhere Betriebstemperatur haben als die Umgebung, macht sich der Vorteil der dünnen Drähte 11 mit einem Durchmesser von 30 µm bemerkbar. Die unerwünschte Wärmeableitung zur kalten Umgebung ist auf ein Minimum reduziert. Wegen der besonderen Konstruktion des Gassensors 6 werden die Drähte mechanisch nicht beansprucht und können daher so dünn sein. Die räumlichen Masse des Gassensors 6 der Figur 6 beträgt 5mm Höhe, 3mm Breite, 3mm Länge. Der Gassensor ist für die Anbringung an den schwierigsten Orten geeignet.

Jede der bisher beschriebenen Sensorelemente 5 bzw. Einzelsensoren 6 sind für die Detektion eines Gases optimal eingestellt. Dies geschieht wie bereits beschrieben durch entsprechende Wahl des Materials 1, der Messmethode und der Betriebstemperatur. Wenn an einem Ort eine Anzahl von verschiedenen Gasen detektiert werden soll werden Mehrfach-Gassensoren der Figuren 7 - 12 eingesetzt.

Die Figur 7 zeigt die Draufsicht mehrerer Sensorelemente, die auf der elektrischen Isolationsschicht 7 angeordnet sind. Bei jedem Sensorelement sind das Material 1 und die Elektroden 4 so angeordnet, wie es die Figur 5 in Seitenansicht zeigt. Die Drähte 11 jedes Elektrodenpaares 4 sind zu Kontaktpunkten 12 geführt, die auf der Isolationsschicht 7 befestigt sind. Die Drähte haben, wie bereits erwähnt, eine sehr kleine Wärmeableitung. Die elektrischen Kontaktpunkte 12 sind über Leitungen mit einem Auswertegerät verbunden, was in der Figur 7 nicht gezeichnet ist. Unter der elektrischen Isolationsschicht 7 sind die Heizschicht 8 und die thermisch und elektrisch isolierende Schicht 9 gemäss Figur 6 angeordnet. Gemäss Figur 7 werden sämtliche Sensorelemente durch die Heizschicht 8 auf die gleiche Betriebstemperatur aufgeheizt.

Es ist auch möglich, dass sämtliche Sensorelemente bei der Umgebungstemperatur betrieben werden. Dann wird keine Heizschicht 8 benötigt, wie es z.B. in der Figur 5 für ein Sensorelement gezeigt ist.

Bei dem Mehrfach-Gassensor der Figur 7 besteht eine weitere Möglichkeit. Jedes Sensorelement kann auf eine andere Betriebstemperatur geheizt werden. Zu diesem Zweck wird für jedes Sensorelement eine eigene Heizschicht 8 vorgesehen, wobei die Heizschichten und die Gebiete der Sensorelemente thermisch voneinander isoliert sind.

In zweckmässiger Weise wird die Ansprechempfindlichkeit jedes Sensorelementes auf ein bestimmtes Gas eingestellt, sodass mit dem Mehrfach-Gassensor der Figur 7 vier verschiedene Gase und deren Konzentrationen detektiert werden können. Selbstverständlich können mehr Sensorelemente auf die Isolationsschicht 7 angeordnet werden.

Die Figur 8 zeigt in Draufsicht einen anderen Typ eines Mehrfach-Gassensors. Auf dem thermisch und elektrisch isolierenden Substrat 10 sind eine grössere Anzahl von Gassensoren der Figuren 2,4a,4d,5 und 6 angeordnet. Wegen der besseren Uebersicht sind nur die Sensoren in der oberen Reihe der Figur 8 eingezeichnet. In der oberen Reihe rechts sind das Material 1 und die zugehörenden Elektroden 4 für zwei Sensorelemente auf die elektrische Isolationsschicht 7 befestigt (Figur 5). Eine Heizschicht ist nicht vorgesehen, da diese Sensorelemente bei Umgebungstemperatur betrieben  werden. Daher ist die
Schicht 7 direkt auf das Substrat 10 geklebt. Die Drähte 11
verbinden die Elektroden 4 mit den elektrischen Kontaktpunkten
12, die auf dem Substrat 10 befestigt sind. Von den Kontaktpunkten gehen die elektrischen Verbindungen zu einem Auswertegerät. In der Mitte der oberen Reihe sind zwei Sensorelemente der Figuren 2 und 4a auf die elektrische Isolationsschicht 7 angeordnet. Unter der Isolationsschicht befinden
sich die elektrische Heizschicht 8 und das elektrisch isolierende Substrat 9, das auf das thermisch und elektrisch isolierende Substrat 10 geklebt ist. Beide Sensorelemente werden auf die gleiche Betriebstemperatur aufgeheizt und konstant
gehalten. Die Drähte 11 verbinden die Elektroden 4 mit den
auf dem thermisch und elektrisch isolierenden Substrat 10
befestigten Kontaktpunkten 12. Bei dem nach Figur 4a konstruierten Sensorelement ist in der Figur 8 die untere Elektrode
nicht sichtbar. Von den Kontaktpunkten gehen Verbindungen
zu dem Auswertegerät. In der oberen Reihe links sind zwei
Sensorelemente gemäss Figuren 4a und 4d angeordnet. Jedes
Sensorelement hat seine eigene Heizschicht 8 und daher auch
die getrennte Isolationsschicht 7 und das elektrisch isolierende Substrat 9. Letzteres ist auf dem thermisch und
elektrisch isolierenden Substrat 10 befestigt. Jedes Sensorelement wird auf eine andere Betriebstemperatur gebracht.
Die Drähte 11 verbinden die Elektroden 4 mit den elektrischen
Kontaktpunkten 12 in gleicher Weise wie bei den vorher beschriebenen Sensorelementen. Das ist jetzt nicht gezeichnet,
da die Figur 8 ihre übersichtliche Darstellung nicht verlieren soll. In der unteren Reihe der Figur 8 ist nur die elektrische Isolationsschicht 7 zur Aufnahme der gemäss Figuren
2 - 6 konstruierten Sensorelemente gezeichnet. Eine Heizungsschicht 8 kann wahlweise vorgesehen sein. Mit dem Mehrfach-
Gassensor der Figur 8 können zwölf verschiedene Gase detektiert werden. Selbstverständlich kann die Anzahl beliebig erhöht werden.

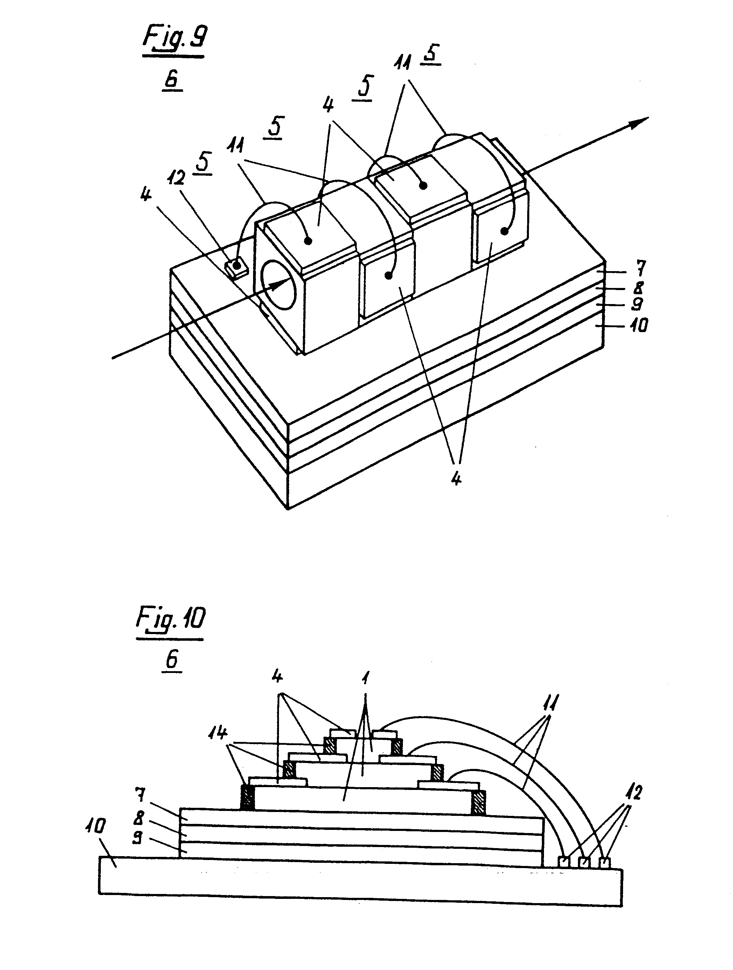

Die Figur 9 zeigt einen anderen Mehrfach-Gassensor. Mehrere Sensorelemente in Form eines Kubus haben in der Mitte ein Loch, das durch sämtlich Sensorelemente 5 hindurchgeht und eine Röhre bildet. In dieser Röhre wird die zu untersuchende Luft geführt, die am Röhrenende wieder austritt. Die Strömungsrichtung ist durch Pfeile angedeutet. Die Sensorelemente ändern ihre elektrische Leitfähigkeit, wenn dasjenige Gas an ihrer Oberfläche vorbeizieht, für welches ihr Ansprechverhalten optimiert wurde. Jedes Sensorelement hat seine Elektroden 4, die so angeordnet sind, dass sie bei der kompakten Anordnung der Sensorelemente sich nicht gegenseitig beeinflussen. Die Drähte 11 sorgen für die elektrische Verbindung der Elektroden 4 zu den auf der elektrischen Isolationsschicht 7 angebrachten Kontaktpunkten 12, die an einem Auswertegerät angeschlossen sind. Eine Heizschicht 8, die zwischen der elektrischen Isolationsschicht 7 und dem elektrischen, isolierenden Substrat 9 angeordnet ist, heizt die Gassensoren auf die gleiche Betriebstemperatur. Die genannte Anordnung ist auf das thermisch und elektrisch isolierende Substrat 10 geklebt. Mit dem Mehrfach-Gassensor der Figur 9 können mehr als nur vier Gase detektiert werden, wenn entsprechend mehr Sensoren angeordnet werden. Die Sensoren können auch mit der optischen Messmethode betrieben werden und können durch dünne Isolierschichten voneinander elektrisch isoliert sein.

Der gesamte Block aus Sensorelementen ist durch eine in der Figur 9 nicht eingezeichnete gasdichte Umhüllung umschlossen mit Ausnahme von zwei Oeffnungen an den beiden Enden. Dadurch ist es möglich, einen gerichteten Gasstrom durch die Sensoranordnung zu führen. Gasförmige Verunreinigungen, die spezifisch am ersten Sensorelement verbraucht werden und dort ein elektrisches Signal ergeben, erzeugen keine Signale mehr an den nächsten Sensorelementen. Gasförmige Verunreinigungen, die erst am zweiten Sensorelement reagieren und dort ein elektrisches Signal erzeugen, ergeben an den folgenden Sensorelementen keine Signale mehr usw.. Durch diese Anordnung ist es möglich, ein Gasgemisch in seine Bestandteile zu zerlegen und die einzelnen Bestandteile an separaten Sensorelementen durch eine Widerstandänderung der selben nachzuweisen. Die Elektroden in der Figur 9 müssen nicht unbedingt aussen angebracht sein, sondern können auch zwischen den einzelnen Sensorelementen vorgesehen sein. Für eine noch bessere Trennung des zu untersuchenden Gemisches von gasförmigen Verunreinigungen der Luft weist der Gassensor in Figur 9 zweckmässig an einem Ende, z.B. am linken, eine tiefere Temperatur auf als am anderen Ende also am rechten. Der Gasfluss ist dann zweckmässig ebenfalls von links nach rechts gemäss Pfeilrichtung. Gase die schon bei tiefen Temperaturen verbrennen, werden dann bevorzugt am linken (erstes Senseorelement) verbrennen und dort eine grosse Aenderung der elektrischen Signale für die Leitfähigkeit ergeben. Gase, die erst bei höheren Temperaturen verbrennen, werden am zweiten Sensorelement, Gase die bei noch höheren Temperaturen verbrennen, erst am dritten Sensorelement usw. verbrennen. Dadurch können die Gase noch viel selektiver detektiert werden. Wenn die Sensorelemente aus einem hochporösen Metalloxidgel, z.B. aus einem Aerogel, bestehen so ist das Mittelloch nicht einmal notwendig. Die Ausführung der Figur 9 soll sich daher auch auf solche Fälle beziehen.

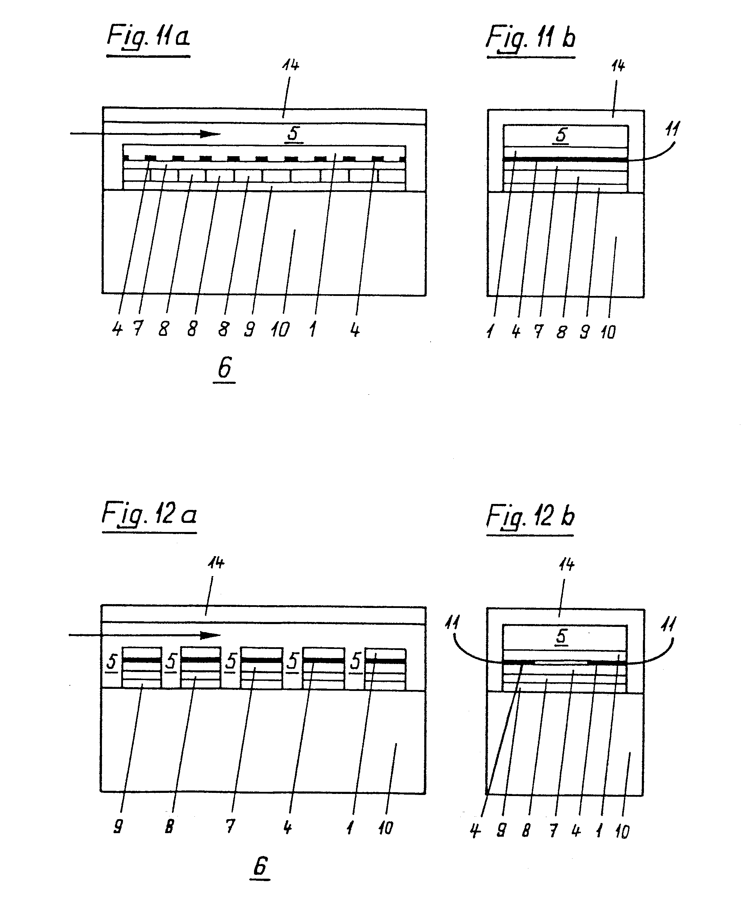

Die Figur 10 zeigt einen Mehrfach-Gassensor, der aus mehreren, pyramidenförmig aufgebauten Sensorelementen besteht. Die Elektroden 4 sind über Drähte 11 mit den am thermisch und elektrisch isolierenden Substrat 10 befestigten, elektrischen Kontaktstellen 12 verbunden, die über Verbindungsleitungen an einem Auswertegerät angeschlossen sind. Die Elektroden sind so isoliert, dass sie nur Kontakt mit dem zugeordneten Material 1 und nicht mit dem Material 1 des anderen Sensorelementes haben. Die Aussenwände der Sensorelemente sind teilweise mit einer gasdichten Schicht 14 versehen. Daher sind nur die nach oben liegenden Flächen der Sensorelemente gasaktiv. Die Sensorelemente sind auf der elektrischen Isolationsschicht 7 befestigt, die mit der Heizschicht 8 und dem elektrisch isolierenden Substrat verbunden ist. Die gesamte Anordnung ist auf dem thermisch und elektrisch isolierenden Substrat 10 befestigt. Wenn auch die Sensorelemente auf die gleiche Betriebstemperatur geheizt und konstant gehalten werden, ist jedes Sensorelement für ein bestimmtes Gas vorgesehen. Es besteht die Möglichkeit, dass z.B. das oberste Sensorelement bei Umgebungstemperatur betrieben wird. Dann sollte das Sensorelement thermisch gegen die andern Sensorelemente isoliert werden. Ferner können mehr Sensorelemente für den Mehrfach-Gassensor der Figur 10 verwendet werden als nur die gezeichneten.

Die Kontaktpunkte 12 in den Figuren 7 - 10 müssen sich nicht unbedingt auf der elektrisch isolierenden Schicht 7 befinden, sie können auch ausserhalb dieser Schicht liegen.

Figur 11a zeigt einen Längsschnitt und Figur 11b einen Querschnitt durch einen Mehrfach-Gassensor 6, der ein Sensorelement 5 enthält, dass aus dem Material 1 besteht und eine grosse Anzahl von Elektroden 4 auf seiner Unterseite trägt. Das Sensorelement 5 ist durch eine elektrisch isolierende Schicht 7 an derHeizschichten 8 befestigt. Die Heizschicht 8 ganz links in der Figur 11a heizt die sich darüber befindliche Zone des Sensorelementes 5 z.B. auf 80°C. Die nächste Heizschicht 8 rechts davon heizt die darüberliegende Zone des Sensorelementes 5 auf z.B. 90°C usw.. Von links nach rechts weist das Sensorelement 5 daher eine ansteigende Temperatur auf. Die einzelnen Heizschichten 8 sind durch eine elektrisch isolierende Schicht 9 auf einem wärmeisolierenden Substrat 10 befestigt.

Die Figur 11 zeigt eine gasdichte Schicht 14, die die Schichten 7, 8 und 9 sowie das Sensorelement 5 so umschliesst, dass oberhalb des Sensorelementes 5 ein freier Raum bleibt. Durch diesen freien Raum wird die zu untersuchende Luft in einem laminaren Strom von links nach rechts geleitet, was durch den Pfeil in der Figur 11a angedeutet ist. Dieser laminare Luftstrom kann durch eine in Figur 11 nicht eingezeichnete Pumpe erzeugt werden oder auch dadurch, dass der ganze Gassensor 6 in Figur 11 senkrecht gestellt wird, wobei die Heizschicht 8 mit der tiefsten Temperatur sich unten befindet. Durch die Kaminwirkung stellt sich dann der laminare Luftstrom von selbst ein.

In der Figur 11b sind auch noch die Ableitdrähte 11 eingezeichnet, die durch die gasdichte Schicht 14 ins Freie führen. Leicht oxidierbare Gase werden nun schon ganz links, bei tiefer Temperatur, verbrennen und dort grosse Aenderungen des elektrischen Widerstandes des Sensorelementes 5 ergeben. Schwieriger zu oxidierende Gase werden z.B. erst in der Mitte des Gassensors 6 bei einer mittleren Temperatur verbrennen und dort eine grosse Aenderung des elektrischen Widerstandes am Sensorelement 5 ergeben. Sehr schwierig oxidierbare Gase hingegen werden erst am rechten, heissen Ende des Gassensors 6 reagieren und dort eine Widerstandsänderung am Sensorelement 5 hervorrufen. Durch diese Anordnung kann also ein Gasgemisch in seine Bestandteile zerlegt und diese Bestandteile separat detektiert werden. Damit wird eine sehr hohe Selektivität des Gassensors erreicht, die durch geeignete mathematische Auswertung der Signale der einzelnen Zonen des Sensorelementes 5 noch beträchtlich gesteigert werden kann. Eine solche Auswertung findet in dem nicht gezeichneten Auswertegerät statt.

Die Figur 12a zeigt einen Längsschnitt und die Figur 12b einen Querschnitt durch einen anderen Mehrfach-Gassensor 6, der mehrere Sensorelemente 5 enthält, die aus verschiedenem Material 1 bestehen und je zwei Elektroden 4 enthalten. Diese Sensorelemente 5 werden durch separate Heizschichten 8, die sich zwischen elektrisch isolierenden Schichten 7 und 9 befinden und auf einem wärmeisolierenden Substrat 10 befestigt sind, auf individuelle Temperaturen gebracht. So weist das ganz links befindliche Sensorelement 5 z.B. eine Temperatur von nur 65°C auf. Das nächste, rechts davon liegende Sensorelement weist eine Temperatur von 80°C auf. Das nächste eine Temperatur von 100°C usw.. Das ganz rechts liegende Sensorelement hat eine Temperatur von 400°C.

Die Figur 12 zeigt auch eine gasdichte Schicht 14, die die Schichten 7, 8 und 9 sowie die Sensorelemente 5 so umschliesst, dass oberhalb der Sensorelemente 5 ein freier Raum offen bleibt. Durch diesen freien Raum wird die zu untersuchende Luft in einem laminaren Strom von links nach rechts geleitet, was durch einen Pfeil in der Figur 12a angedeutet ist. Wie schon bei der Figur 11 ausgeführt wurde, kann dieser laminare Luftstrom entweder durch eine externe, in Figur 12 nicht eingezeichnete Pumpe erzeugt werden oder durch die Kaminwirkung, die entsteht, wenn der ganze Gassensor 6 senkrecht gestellt wird, wobei das Sensorelement mit der tiefsten Temperatur sich unten befindet. Die Ableitdrähte 11 führen in der Figur 12b durch die gasdichte Schicht 14 ins Freie.

Wie schon bei der Figur 11 ausgeführt wurde, werden leicht oxidierbare Gase schon beim ersten sich ganz links befindlichen Sensorelement 5 verbrennen und dort eine grosse Aenderung des elektrischen Widerstandes erzeugen. Das Material 1 dieses Sensorelementes 5 ist auch so ausgewählt, (es enthält z.B. einen speziellen Katalysator) dass diese leicht oxidierbaren Substanzen bevorzugt an diesem Sensorelement verbrennen können. Etwas schwieriger oxidierbare Substanzen werden am zweiten Sensorelement (bezogen auf die Luftströmung) verbrennen, wobei diese Oxidation durch eine optimale Betriebstemperatur, die etwas höher ist als diejenige des vorhergehenden Sensorelementes, und durch eine geeignete chemische Zusammensetzung des Materials 1 stark gefördert wird. Da neben den ansteigenden Temperaturen in Richtung des Luftstromes auch die chemische Zusammensetzung der Materialien 1 der Sensorelemente 5 optimal gewählt wird, können die zu detektierenden gasförmigen Verunreinigungen der Luft äusserst selektiv erfasst werden. Eine geeignete mathematische Verknüpfung der Signale der einzelnen Sensorelemente 5 kann die Selektivität dieses Gassensors 6 nochmals sehr stark erhöhen.

PATENTANSPRUECHE

1. Vorrichtung zum Nachweis von gasförmigen Verunreinigungen in Luft mittels eines Gassensors, der bei Einwirkung von reduzierenden oder oxidierenden Gasen seine elektrischen und optischen Eigenschaften ändert und dessen Material (1)zur Bildung einer grossen Oberfläche und einer hohen Gasdurchlässigkeit eine grosse Anzahl von Körnern und Hohlräumen enthält und einer Auswerteschaltung, d a - d u r c h  g e k e n n z e i c h n e t, dass der Gassensor (6) mindestens ein Sensorelement (5) enthält, dessen Material (1) aus mindestens einem, einheitlichen, getrockneten Gel-Stück mit homogener Verteilung der Körner (2) und Zwischenräume (3) besteht.

2. Vorrichtung nach Anspruch 1, d a d u r c h  g e k e n n - z e i c h n e t, dass das Material (1) eine Porosität von mindestens 5 Vol.-%, vorzugsweise mindestens 40 Vol.-%, insbesondere mindestens 80 Vol.-%, aufweist. (Figur 1)

3. Vorrichtung nach einem der Patentansprüche 1 und 2, d a d u r c h  g e k e n n z e i c h n e t, dass das Material (1) eine Korngrösse im Bereiche von 1 nm bis 500 nm aufweist. (Figur 1)

4. Vorrichtung nach einem der Patentansprüche 1 bis 3, d a d u r c h  g e k e n n z e i c h n e t, dass das Material (1) mindestens ein Metalloxid oder -hydroxid aus mindestens einer der Gruppen Ib, IIa, IIb, IIIa, IIIb, IVa, IVb, Va, Vb, VIa, VIb, VIIb, VIII des Periodensystems und der Lanthanoiden und Actinoiden enthält. (Figur 1)

5. Vorrichtung nach Patentanspruch 4, d a d u r c h   g e - k e n n z e i c h n e t, dass das Material (1) zusätzlich mindestens einen Katalysator, vorzugsweise mindestens eines der Metalle Silber, Gold, Platin, Palladium, Rhodium, Iridium, Ruthenium, Osmium, Kupfer, Chrom, Nickel, Eisen, Kobalt, Lanthan, Cer, Mangan und/oder eines Oxids dieser Metalle enthält.

6. Vorrichtung nach einem der Patentansprüche 4 und 5, d a d u r c h   g e k e n n z e i c h n e t, dass das Material (1) unter der Einwirkung von reduzierenden oder oxidierenden Gasen seine elektrische Leitfähigkeit ändert. (Figuren 1, 2, 3, 4, 5)

7. Vorrichtung nach einem der Patentansprüche 4 und 5, d a - d u r c h   g e k e n n z e i c h n e t, dass das Material (1) optisch transparent ist und unter der Einwirkung von reduzierenden oder oxidierenden Gasen sein optisches Absorptions- und/oder Reflexionsspektrum ändert. (Figuren 3, 4f)

8. Vorrichtung nach einem der Patentansprüche 1 bis 7, d a - d u r c h   g e k e n n z e i c h n e t, dass das Sensorelement bzw. die Sensorelemente (5) eine Heizvorrichtung (8) aufweist, bzw. aufweisen und auf einem hitzebeständigen, wärmeisolierenden Substrat (10) angeordnet ist, bzw. sind. (Figur 6)

9. Vorrichtung nach Patentanspruch 8, d a d u r c h   g e - k e n n z e i c h n e t, dass zwischen dem Material (1) und dem hitzebeständigen, wärmeisolierenden Substrat (10) mindestens eine zur Befestigung des Sensorelementes (5) auf dem Substrat (7) und zur Wärmeübertragung zwischen der Heizvorrichtung (8) und dem Material (1) dienende Elektrode (4) vorgesehen ist.

10. Vorrichtung nach einem der Patentansprüche 8 und 9, d a -
d u r c h   g e k e n n z e i c h n e t, dass mehrere Sensorelemente (5) vorgesehen sind und dass jedes der Sensorelemente (5) eine separate, zwischen elektrisch isolierenden Schichten (7, 9) angeordnete elektrische Heizvorrichtung (8) aufweist.

11. Vorrichtung nach einem der Patentansprüche 8 und 9, d a -
d u r c h   g e k e n n z e i c h n e t, dass die Sensorelemente (5) eine zwischen elektrisch isolierenden Schichten (7, 9) angeordnete, mehreren oder allen Sensorelementen (5) gemeinsame Heizvorrichtung (8) aufweisen.

12. Vorrichtung nach einem der Patentansprüche 8 bis 11,
d a d u r c h   g e k e n n z e i c h n e t, dass die Heizvorrichtung (8) eine Schicht aus Platin, Iridium oder aus einer Legierung dieser Metalle mit einem grossen Temperaturkoeffizienten der elektrischen Leitfähigkeit zur gleichzeitigen Bestimmung der Heiztemperatur ist.

13. Vorrichtung gemäss einem der Patentansprüche 8 bis 12,
d a d u r c h   g e k e n n z e i c h n e t, dass die Sensorelemente (5), die Heizvorrichtung (8) und das wärmeisolierende Substrat (10) so angeordnet sind, dass die Luft in einem gerichteten Strom an den Sensorelementen (5) vorbeigeleitet wird.

14. Vorrichtung nach einem der Patentansprüche 1 bis 12,
d a d u r c h   g e k e n n z e i c h n e t, dass eine gasdichte Schicht (14) vorgesehen ist, die so angeordnet ist, dass die Luft in einem gerichteten Strom an den Sensorelementen (5) vorbeigeleitet wird.

15. Vorrichtung nach einem der Patentansprüche 13 und 14, d a d u r c h   g e k e n n z e i c h n e t, dass die Sensorelemente (5) in Richtung des Luftstroms gesehen hintereinander angeordnet sind.

16. Vorrichtung nach Patentanspruch 15, d a d u r c h   g e - k e n n z e i c h n e t, dass die Sensorelemente (5) einen zusammenhängenden Block mit einer Reihe von Elektroden bilden, wobei in Richtung des Luftstroms eine Temperaturgradient vorhanden ist.

17. Vorrichtung nach Anspruch 15, d a d u r c h   g e k e n n - z e i c h n e t, dass die Sensorelemente (5) auf eine unterschiedliche Betriebstemperatur aufheizbar sind, wobei vorzugsweise das in Richtung des Gasstroms gesehen vorn liegende Sensorelement (5) eine niedrigere Temperatur aufweist als das dahinter liegende.

18. Verfahren zur Herstellung eines Sensorelements (5) gemäss Patentanspruch 1, d a d u r c h   g e k e n n z e i c h - n e t, dass kolloidale Lösung mindestens eines Metalloxides, Metalloxidhydrates oder Metallhydroxides als dünne Schicht in eine Form gegossen und mehrere Tage lang bei Zimmertemperatur getrocknet wird, dass die erhaltene Gelplatte (16) aus hochreinem Metalloxid-, Metalloxidhydrat- oder Metallhydroxidgel zur Erzeugung eines Metalloxidxerogels mit einer vorbestimmten Porosität und Korngrösse bei Normaldruck und mit einer Aufheizgeschwindigkeit von max. 100°C pro Stunde auf eine Temperatur gebracht wird, die höchstens 700°C, vorzugsweise höchstens 500°C, insbesondere höchstens 300°C, über der späteren Betriebstemperatur des Gassensors liegt und anschliessend auf Zimmertemperatur abgekühlt wird und dass die für den Gasnachweis günstigste Raumform des Sensorelementes (5) aus der Gelplatte (16) herausgetrennt wird.

19. Verfahren zur Herstellung eines Sensorelementes (5) gemäss Patentanspruch 1, d a d u r c h   g e k e n n -
z e i c h n e t, dass eine kolloidale Lösung mindestens
eines Metalloxides, Metalloxidhydrates oder Metallhydroxides als dünne Schicht in eine Form gegossen und mehrere
Tage lang bei Zimmertemperatur getrocknet wird, dass die
erhaltene Gelplatte (16) aus hochreinem Metalloxidgel,
Metalloxidhydratgel oder Metallhydroxidgel zur Erzeugung
eines Metalloxidaerogels mit einer vorbestimmten Porosität
und Korngrösse mehrere Wochen lang bei Normaldruck und
Zimmertemperatur unter wiederholter Hinzufügung eines
organischen Lösungsmittels in eine das organische Lösungsmittel enthaltende Gelplatte übergeführt und anschliessend
für mindestens eine halbe Stunde auf einen Druck und eine
Temperatur, die  für das verwendete Lösungsmittel überkritisch sind, gebracht wird, worauf der Druck auf Normaldruck gesenkt wird und schliesslich die Temperatur auf
Zimmertemperatur gebracht wird und dass die für den Gasnachweis günstigste Raumform des Sensorelementes (5) aus
der Gelplatte (16) herausgetrennt wird.

20. Verfahren zur Herstellung eines Sensorelementes (5) gemäss
Patentanspruch 1, d a d u r c h   g e k e n n z e i c h -
n e t, dass eine kolloidale Lösung mindestens eines Metalloxides Metalloxidhydrates oder Metallhydroxides in
einem organischen Lösungsmittel als dünne Schicht in eine
Form gegossen und mehrere Tage lang bei Zimmertemperatur
getrocknet wird, dass die erhaltene Gelplatte (16) aus
hochreinem Metalloxidgel, Metalloxidhydratgel oder Metallhydroxidgel, die das organische Lösungsmittel enthält
zur Erzeugung eines Metalloxidaerogels mit einer vorbestimmten Porosität und Korngrösse mindestens eine halbe
Stunde lang auf einen Druck und eine Temperatur, die für
das organische Lösungsmittel überkritisch sind, gebracht
wird, worauf der Druck auf Normaldruck gesenkt wird und schliesslich die Temperatur auf Zimmertemperatur gebracht wird und dass die für den Gasnachweis günstigste Raumform des Sensorelementes (5) aus der Gelplatte (16) herausgetrennt wird.

21. Verfahren nach einem der Ansprüche 18 bis 20, d a - d u r c h   g e k e n n z e i c h n e t, dass zur Dotierung des Materials (1) mit einem Katalysator eine Lösung mindestens eines organischen Metallsalzes oder Metallkomplexes aus Silber, Gold, Platin, Palladium, Rhodium, Iridium, Ruthenium, Osmium, Kupfer, Chrom, Nickel, Eisen, Kobalt, Lanthan, Cer oder Mangan der kolloidalen Lösung eines Metalloxides, Metalloxidhydrates oder Metallhydroxides zugefügt wird.

22. Verfahren nach einem der Ansprüche 18 bis 20, d a - d u r c h   g e k e n n z e i c h n e t, dass zur Dotierung des Materials (1) mit einem Katalysator die Gelplatte (16) aus Metalloxid, Metalloxidhydrat, oder Metallhydroxid mit einer Lösung mindestens eines organischen Metallsalzes oder Metallkomplexes aus Silber, Gold, Platin, Palladium, Rhodium, Iridium, Ruthenium, Osmium, Kupfer, Chrom, Nickel, Eisen, Kobalt, Lanthan, Cer oder Mangan getränkt wird und anschliessend bei einer Temperatur ausgeheizt wird, die höchstens 700°C, vorzugsweise höchstens 500°C, insbesondere höhstens 300°C über der späteren Betriebstemperatur des Gassensors liegt.

1 (6)

a.)

3  2

_Fig. 1_

b.)

3  2

c.)

1

16

1

_Fig. 2_

4          4      11

5

11

1

_Fig. 3_

21      22

20

1    5

201    221

211      4      4

## Fig. 4

_Fig. 4_

k)

l)

m)

n)

o)

p)

q)

r)

s)

_Fig. 5_

0141090

## Fig.6          6

## Fig.7

## Fig.8

## Fig. 9
### 6

## Fig. 10
### 6

_Fig. 11a_

14

5

4 7 8 8 8 9 10 1 4

_6_

_Fig. 11 b_

14

5

11

1 4 7 8 9 10

_Fig. 12 a_

14

5 5 5 5 5

9 B 7 4 1 10

_6_

_Fig. 12 b_

14

11

5

11

4 9 8 7 4 1 10